# EUROPEAN PATENT SPECIFICATION

(11) **EP 2 996 493 B1**
(45) Date of publication and mention of the grant of the patent: **15.11.2017**
(21) Application number: 14732953.6
(22) Date of filing: 29.04.2014
(51) Int. Cl.: A23L 23/00, A23L 29/269, A23L 27/00, A23L 27/10

(54) **FOOD PREPARATION WITH MUSHROOMS AND MAKING PROCESS**
LEBENSMITTELPRÄPARAT MIT PILZEN UND HERSTELLUNGSVERFAHREN
PRÉPARATION D'ALIMENTS AUX CHAMPIGNONS ET PROCESSUS D'ÉLABORATION

(30) Priority: 10.05.2013 IT RN20130013
(43) Date of publication of application: 23.03.2016
(73) Proprietor: Aurea Center Srl, 37854 Pergine Valsugana (TN) (IT)
(72) Inventor: DALLA ROSA, Marco, I-47521 Cesena (FC) (IT); BALESTRA, Federica, I-47522 Cesena (FC) (IT); COCCI, Emiliano, I-47521 Cesena (FC) (IT); BRUGNARA, Andrea, I- 38057 Pergine Valsugan (IT); OREFICE, Gianni Rosario, I-38057 Pergine Valsugan (IT)
(74) Representative: Busca, Andrea
(86) International application number: PCT/IB2014/061088
(87) International publication number: WO 2014/181219

(56) References cited:
- WO-A1-93/15617
- KR-A- 20010 048 584
- US-A- 5 215 769
- US-A- 5 709 876
- US-A1- 2007 154 557
- Anonymous: "GNPD - Fresh Cep Sauce", , 1 December 2011 (2011-12-01), XP055090104, Retrieved from the Internet: URL:http://www.gnpd.com/sinatra/recordpage /1683047/from_search/c6RrpTnhgb/ [retrieved on 2013-11-26]
- Anonymous: "GNPD - Shiitake Chardonnay Vinaigrette Dressing", , 1 December 2002 (2002-12-01), XP055090128, Retrieved from the Internet: URL:http://www.gnpd.com/sinatra/recordpage /10122951/from_search/sr13Iy2I7S/ [retrieved on 2013-11-26]
- DATABASE FSTA [Online] INTERNATIONAL FOOD INFORMATION SERVICE (IFIS), FRANkFURT-MAIN, DE; 1999, RODRIGO M ET AL: "Quality of canned mushrooms acidified with glucono-delta -lactone.", XP002716968, Database accession no. FS-1999-09-Jq2220 & INTERNATINAL JOURNAL OF FOOD SCIENCE AND TECHNOLOGY, vol. 34, no. 2, 1999, page 161, INTERNATIONAL JOURNAL OF FOOD SCIENCE & TECHNOLOGY 1999 INST. DE AGROQUIMICA Y TEC. DE ALIMENTOS (CSIC), JAIME ROIG 11, 46010 VALENCIA, SPAIN

## Description

The present invention relates to a food preparation with mushrooms, preferably wild, even more preferably from the Boletaceae family (hereinafter referred to as "Boletus" for brevity), and even more preferably of the species named "Boletus edulis", i.e. porcino mushrooms. It is noted that "wild mushrooms" refers to mushrooms born spontaneously in nature, such as in woods and meadows, and therefore not cultivated by man.

The preparation preferably has a creamy or frosting texture, and is generally intended for use as a base for sauces and/or used as such as a gourmet condiment; however, other uses and textures are not excluded. The present invention also relates to a method for manufacturing such food preparation.

It is noted that by food preparation having a creamy or frosting texture it is meant a multiphase system with rheological parameters determined at 1 Hz frequency defined by a complex viscosity (Pa*s) between 5 and 120, an accumulation modulus G' (Pa) between 30 and 900, a dissipative modulus G" (Pa) between 10 and 300.

The field of food preparations has developed for a long time because of the need to speed up the manufacture of finished dishes or to have products ready for use, both at home and in restaurants.

For example, the European patent EP1468615 by "Barilla Alimentare Spa" is known, wherein a food preparation having a creamy texture is formulated to be used as a base in the preparation of sauces. However, the Applicant has noted that the Barilla patent is a totally general patent, which uses the same formulation to create preparations that are also very different from one another, such as those based on herbs and those based on mushrooms. Barilla therefore does not address in any way the specific problems of mushrooms, first of all the organoleptic quality of the end product.

Furthermore, the Applicant points out that since the cream is a mixture of several ingredients of a different nature, and thus chemically and physically not stable, Barilla does not describe any system to maintain its homogeneity and stability over time.

The Applicant also notes that Barilla uses fresh foods as a starting base, making the process for obtaining the preparation more complex to manage at an industrial level, because of the difficulties of storage and the need for plants provided with refrigerators that increase the final cost.

In addition, Barilla does not consider the possibility of obtaining the preparation with wild mushrooms, which by their nature are originally impure, due the presence of larvae, soil, moss, pine needles, etc.

Finally, Barilla does not provide a formulation usable as a food ready for consumption as such, for example as a seasoning.

From KR20010048584 it is known to make a sauce by cooking some fresh mushrooms. This document therefore has the same problem of Barilla.

It is also known an anonymous document at "GNPD - Shiitake Chardonnay Vinaigrette Dressing - 1 december 2002 XP055090128, retrieved from the internet URL:http://www.gnpd.com/sinatra/recordpage/10122951/from_ search/sr13ly. It discloses a list of ingredients comprising mushrooms. Anyway it is totally general and lacks at least to teach how to separate pollutants from mushrooms'.

A general object underlying the present invention is therefore to overcome, at least partially, the drawbacks of the prior art.

A preferred object of the present invention is to provide the formulation of a food preparation with mushrooms, more preferably wild mushrooms, even more preferably porcino mushrooms, having high organoleptic features.

Another preferred object of the present invention is to obtain a formulation which is homogeneous and stable over time.

Another further object of the present invention is to provide a food preparation which is simple and cost-effective to produce at an industrial level.

Another object of the present invention is to provide a food preparation that has excellent organoleptic features with a minimum use of fine ingredients such as mushrooms.

Yet a further object of the present invention is to provide a food preparation with wild mushroom free from their contaminants, such as larvae, soil, moss, pine needles, etc.

Yet a further object of the present invention is to provide a food preparation with mushroom with a long shelf-life, that is, which retains the properties of edibility for a very long time.

According to a first general aspect thereof, the present invention relates to a food preparation according to claim 1, that is, a food preparation with mushrooms, characterized in that it comprises, in weight percentage on the total weight, 20% to 60% edible fats, 5% to 40% dry residue of mushrooms, 20% to 60% water.

The Applicant has also observed that the best results of mixing between fats and mushrooms are obtained with the following ranges, in weight percentage on the total weight: 31% to 49% edible fats, 5% to 35% mushrooms calculated in dry residue condition, 25% to 49% water and at least one thickening ingredient.

More preferably, water is between 25% and 45%. Even more preferably, the preparation comprises 33% to 45% edible fats, 5% to 28% mushrooms calculated in dry residue condition, and 30% to 45% water.

In general, it is observed that the fats comprise at least one oil, more preferably they are an oil or a mixture of oils.

The "dry residue of mushrooms" is understood in general to have a residual moisture content less than or equal to 5%, more preferably less than or equal to 1%. If a mushroom extract is used in the formulation, its percentage of water is considered herein as included in the total percentage of water. The extract can generally be obtained from fresh mushrooms, but more preferably it is obtained from dried mushrooms.

The dry residue of mushrooms is for example what remains by removing the water from the mushrooms or an extract thereof, for example by drying or freeze-drying.

Following many experiments, the Applicant has found that the percentages indicated above allow high levels of appreciation of the mushroom flavor, even with low amounts of this precious element. In particular, in a first experimental step it was found that the mere presence of mushrooms and fats did not allow the flavorings to emanate adequately, especially if the mushrooms were added in the form of mushroom powder, extract powder or liquid extract directly, for example concentrated, which was instead optimized by the presence of water on the percentage indicated above.

The use of mushrooms in the form of extract residue or in the form of the extract, for example concentrated, is particularly appreciated in that any impurities are not present, thus allowing the creation of a pure preparation, even with wild mushrooms.

The powder and/or the dry residue and/or the mushroom extract are also more easily storable and therefore usable industrially compared to fresh mushrooms, and therefore they lead to a reduction of production costs.

According to some preferred embodiments, the thickening ingredient comprises xanthan gum, more preferably the xanthan gum is the only thickening ingredient. Xanthan gum is particularly preferred for the minimum amounts required. For example, an adjusted percentage by weight on the total weight is less than or equal to 0.20%. This thickening component was identified after many experiments since it allows achieving optimum consistency and stability of the mixture over time, especially when a cream or frosting texture is desired. Thanks to xanthan, moreover, unpleasant aspects related to the use of other stabilizers is prevented, such as the necessity of very high amounts of stabilizer, or the formation of filaments, such as occurs by mixing large amounts of starch. Starch, in particular, can thus be present in a reduced amount, or preferably be absent.

In general, any type of thickener may be used, for example it is possible to choose between at least one thickening ingredient among: xanthan gum, starch, modified starch, pectin, amidated pectin, alginic acid and salts thereof, propylene glycol alginate, agar-agar, arabic gum, tragacanth gum, carrageenan, carob seed flour, guar seed flour, cellulose, methyl cellulose, hydroxypropyl cellulose and carboxymethyl cellulose, polyphosphates.

In general, it is also possible to use one or more of such thickeners in combination. The amount of thickener, in weight percentage on the total weight, especially in the case of starch or modified starch, is less than or equal to 6%, more preferably 2.5%.

In general, it is preferable that the food preparation according to the present invention includes at least two ingredients capable of lowering the water activity (a_{w}) selected from NaCl, KCl, glucose, starch. The starch is, however, less preferred and preferably absent.

This advantageously reduces the need to abound with NaCl, which is known to be cooking salt. In this way, it is possible to adequately control the flavor of the preparation. For example, excellent results are achieved with the use, in weight percentage on total weight, of NaCl less than or equal to 5%, more preferably less than or equal to 3%, even more preferably between 0.5% and 2%, KCl less than or equal to 4%, more preferably less than or equal to 2%, even more preferably between 0.2% and 2%, glucose less than or equal to 8%, more preferably less than or equal to 6%, starch less than or equal to 6% and preferably absent. In this case, it is possible to obtain the water activity (a_{w}) less than or equal to 0.95, thus extending the shelf-life.

According to some preferred embodiments of the invention, the food preparation comprises Glucone Delta Lactone.

This ingredient was introduced as a result of a long experimentation to reduce the pH by reducing or eliminating the use of other components such as citric acid or lemon juice, which would excessively increase the acid taste, not suitable for mushroom preparations.

For example it is possible to use, in weight percentage on the total weight, an amount of Glucone Delta Lactone less than or equal to 3%, more preferably less than or equal to 1.5%. This allows obtaining a pH less than or equal to 4.5, but more preferably the pH is between 3.5 and 3.9.

In general, it is preferable that the food preparation according to the present invention has a creamy or frosting texture, even more preferably it is preferable that it has the appearance of a homogeneous mixture. This favors the use thereof as a ready seasoning.

According to a second general aspect thereof, the present invention relates to a process according to claim 10, that is, a method for manufacturing a food preparation with mushrooms according to any one of the preceding claims, characterized in that the ingredients are combined according to the following timeline:
- fats and at least one thickening ingredient are first mixed together, then the remaining ingredients are added to the mixture.

The experimentation conducted by the Applicant has in fact determined that this chronological sequence allows to obtain a particularly stable mixture.

At least one liquid ingredient is added to the fat-thickening ingredient mixture before adding other ingredients.

In this way, the mixture is particularly homogeneous.

Preferably, said at least one liquid ingredient is selected from: water, mushroom extract, concentrated mushroom extract.

After mixing the at least one liquid ingredient, at least one ingredient in powder form is added and is mixed again, so that it is dispersed homogeneously.

The at least one powder ingredient is preferably selected from: mushroom powder, Glucose, Sodium Chloride, Glucone Delta Lactone, Potassium Chloride, Starch.

In general, it is preferable to add more than one ingredient in powder form, where the powder ingredients are pre-mixed together before being added.

According to some preferred embodiments, in a first step the fats and the at least one thickener, preferably xanthan gum, are mixed together, a predetermined amount of water is added to the mixture thus obtained and it is mixed again until obtaining a cream or frosting, then the following premixed powder ingredients are added: mushrooms, Glucose, Sodium Chloride, Glucone Delta Lactone, Potassium Chloride; the mushroom powder preferably is a dry residue of liquid extract, alternatively the mushrooms can be added in the form of liquid extract, preferably concentrated.

According to a preferred feature of the process, at least a step of mixing occurs at a pressure lower than atmospheric pressure.

In general, it is preferable that, in the case of mushroom extract, it is made by soaking a predetermined amount of mushrooms - preferably dried - in water, and subsequently filtering. The resulting extract is therefore liquid.

The concentrated extract or powder are obtained from the liquid extract by proceeding with the partial or total removal of water by different possible technologies including, for example, freeze-drying or drying.

In any case, it is ensured that the powder or extract or concentrated extract used in the preparation are free from impurities such as larvae, soil, moss, pine needles, etc.

Further features and advantages of the present invention will appear more clearly from the following detailed description of preferred embodiments thereof, made by way of non-limiting example.

According to some preferred formulations thereof, the food preparation according to the present invention comprises, in weight percentage on the total weight (where the percentages refer to anhydrous ingredients except for water and fat, or where otherwise specified):

### EXAMPLE 1 - GENERAL

Mushroom powder from extract: 5% to 20%
Edible fats (preferably oil or oils): 33% to 45%
Water: 25% to 50%
Xanthan gum: 0.05% to 0.20%
NaCl: 2% to 3%
KCl: 1% to 2%
Glucose: 4% to 6%
Glucone Delta Lactone: 0.3% to 1.5%

This formulation allows to make creams or frosting to make sauces having organoleptic qualities comparable to those made with fresh mushrooms, even though mushroom powder is used.

Optionally, the preparation can be enriched with other ingredients, such as pumpkin seed oil, for example, in weight percentage on the total weight of between 1% and 5%.

### EXAMPLE 2 - GENERAL

According to an even more preferred formulation, the food preparation according to the present invention comprises, in weight percentage on the total weight:
Mushroom powder from extract: 10% to 15%
Oil: 33% to 45%
Water: 30% to 40%
Xanthan gum: 0.10% to 0.15%
NaCl: 2.2% to 2.7%
KCl: 1% to 1.5%
Glucose: 4.5% to 5.5%
Glucone Delta Lactone: 0.5% to 0.9%

### EXAMPLE 3 - SPECIFIC

A specific manufacturing example that in first laboratory tests was found to have a particularly balanced taste from the point of view of flavor and acidity, as well as an enhancement of the taste of the mushrooms and a particularly low parameter of water activity for a very long-life is the following, in weight percentage on the total weight:
Mushroom powder from extract: 22.79%
Oil: 31.39%
Water: 38.51%
Xanthan gum: 0.096%
NaCl: 1.93%
KCl: 0.96%
Glucose: 2.89%
Glucone Delta Lactone: 1.44%
Coated pumpkin seed oil granules (optional): 2.53%

As will be noted, this specific example has however a very high amount of mushroom powder, it is therefore less preferred.

### EXAMPLE 4 - SPECIFIC

Laboratory tests led to the following more detailed formulation, in weight percentage on the total weight, particularly appreciated for its low content of the finest element (mushrooms) with excellent organoleptic and stability features:
Mushroom powder from extract: 12.66%
Oil: 39.75%
Water: 35.46%
Xanthan gum: 0.12%
NaCl: 2.43%
KCl: 1.22%
Glucose: 5.06%
Glucone Delta Lactone: 0.76%
Coated pumpkin seed oil granules (optional): 2.53%

In order to obtain a cream or frosting from the above formulations, the ingredients were mixed using a robot equipped with an accessory blender. Following numerous tests and trials it was realized that in order to achieve proper mixing of the ingredients and make the most of the thickening and emulsifying properties of the xanthan gum, it is necessary to follow the chronological order indicated below:
- introduce the oil/oils;
- add the xanthan gum and mix for a few minutes;
- add water and mix for a few minutes until the formation of a white matt cream or glaze where there are no visible oil droplets;
- add the remaining anhydrous ingredients (e.g. mushroom powder, NaCl, KCl, glucose and Glucone Delta Lactone) previously pre-mixed;
- mix until a homogeneous cream or icing is obtained.

In general, it is observed that at the end of the mixing process it is possible to perform a mild heat treatment (pasteurization) in order to stabilize the cream or frosting preventing changes in the organoleptic features thereof.

### EXAMPLE 5 - SPECIFIC

At an industrial level it may be convenient to use a mushroom extract or a concentrated extract instead of the mushroom powder directly in the production process. Below is an example of this application:
In a first step, a mushroom extract is obtained that is subsequently concentrated to obtain a degree brix comprised between 15 and 50, or more preferably between 15 and 40, for example, 26.3 degrees brix.

The next step is to mix the fats with the xanthan gum and optionally add a predetermined amount of water. The concentrated mushroom extract and the remaining anhydrous ingredients in premixed powders are added to the mixture thus obtained. Mixing is then carried out, preferably at a pressure lower than atmospheric pressure, for example -980 mbar.

In general, the extraction is carried out using dried mushrooms, for example, Boletus, immersed in water with a weight ratio of mushrooms/water comprised between 1:8 and 1:12, preferably equal to 1:10. The mushrooms are kept in bath at a temperature comprised between 70 and 80 °C, preferably 75 °C, for a time comprised between 30 and 100 minutes, preferably 30, 60 or 85 minutes.

The hydration water is an extract and undergoes a sequence of filtrations through a series of filters with increasing retaining capacity. For example, filters are used with ability to retain elements of size greater than 1mm, 180µm, 150µm, 105µm.

It is noted that by "filter" it is meant here any device capable of retaining elements with a size greater than a predetermined size, if needed it therefore includes both actual filters and sieves and/or sifters.

### OTHER POSSIBLE RECIPES

**weight percentages on the total weight**

| | RECIPE 6 | RECIPE 7 | RECIPE 8 | RECIPE 9 |
|---|---|---|---|---|
| a_{w} | 0.925 | | | |
| water | [20-60]% | | | |
| Liquid extract of dried mushroom | 49% | 47% | 47% | 47% |
| (BRIX) | ([15-50]) | ([15-50]) | ([15-50]) | ([15-50]) |
| oil | 45% | 43% | 43% | 43% |
| glucose | 0 | 0 | 0 | 0 |
| starch | 0 | 0 | 0 | 0 |
| dextrose | 1.5% | 4.5% | 4.5% | 4.5% |
| sodium chloride (NaCl) | 0.5% | 0.5% | 0.5% | 0.5% |
| potassium chloride (KCl) | 0.2% | 1.74% | 1.74% | 1.74% |
| glucone | 1.60% | 1.60% | 2.80% | 3.80% |
| xanthan | 0.16% | 0.16% | 0.16% | 0.16% |
| honey | 1% | 1% | 1% | 1% |
| porcino mushroom flavor | 0.3% | 0.3% | 0.3% | 0.3% |
| Flavor enhancer | 0.1-2% | 0.1-2% | 0.1-2% | 0.1-2% |
| rosemary | 0.2% | 0.2% | 0.2% | 0.2% |

In general, it is noted that in each receipt it is possible to add a percentage of simple and complex sugars, for example less than or equal to 15% by weight on the total weight. More preferably, honey is used.

Also in general, it is noted that it is possible to add yeast and/or flavorings to reduce the a_{w} and enhance the flavor.

In general, the a_{w} according to the present invention is between 0.9 and 0.925.

Still in general, the pH of the recipes according to the present invention is between 3.5 and 3.9.

As regards the rheological appearance, the creams or icings indicated in the examples have rheological parameters determined to 1 Hz frequency defined by a complex viscosity (Pa*s) comprised between 10 and 25, a parameter G' (Pa) between 70 and 130, a parameter G" (Pa) between 20 and 45 where G' and G" are known as accumulation modulus or elastic modulus and dissipative modulus or viscous modulus respectively.

The Applicant, however, has experimented as acceptable rheological values which fall at least up to the following ranges:
rheological parameters determined at 1 Hz frequency defined by a complex viscosity (Pa*s) between 10 and 100, a parameter G' (Pa) between 60 and 600, a parameter G" (Pa) between 15 and 120.

However, compositions that fall within the broadest ranges of rheological values given in the preamble are not excluded, which define more generally the frosting/cream condition of interest.

## Claims

1. Process for making a food preparation with mushrooms, having a creamy or frosting texture, which is a multiphase system with rheological parameters determined at 1 Hz frequency defined by a complex viscosity (Pa*s) between 5 and 120, an accumulation modulus G' (Pa) between 30 and 900, a dissipative modulus G" (Pa) between 10 and 300, wherein the food preparation has, in weight percentage on the total weight, 20% to 60% edible fats, 5% to 40% dry residue of mushrooms, 20% to 60% water, and at least one thickening ingredient, the percentage of mushrooms considered in the dry residue condition derives from the use of a liquid extract of mushroom, preferably concentrated, and/or a dry residue resulting from a mushroom extract, where in case a liquid extract of mushroom is used in the formulation, its percentage of water is herein considered included in the total percentage of water, the process comprising the step of obtaining the mushroom extract used by soaking a predetermined amount of mushrooms in water, and subsequently filtering.

2. Process according to claim 1, **characterized in that** the liquid extract is obtained from dried mushrooms.

3. Process according to the preceding claim, **characterized in that** it comprises, in weight percentage on the total weight, 31% to 49% edible fats, 5% to 35% mushrooms calculated in dry residue condition, 25% to 49% water.

4. Process according to any one of the preceding claims, **characterized in that** the total amount of thickening ingredient, or a combination of thickening ingredients, if more than one is present, in weight percentage on the total weight, is less than or equal to 6 %, more preferably less than or equal to 2.5%, where the xanthan gum, if present, is preferably less than or equal to 0.20%.

5. Process according to any one of the preceding claims, **characterized in that** it comprises at least two ingredients capable of lowering the water activity (a_{w}) selected from NaCl, KCl, glucose, starch.

6. Process according to any one of the preceding claims, **characterized in that** it comprises Glucone Delta Lactone.

7. Process according to any one of the preceding claims, **characterized in that**, it has a pH of between 3.5 and 3.9.

8. A process for making a food preparation with mushrooms according to any one of the preceding claims, **characterized in that** the ingredients are combined according to the following temporal sequence:
- fats and at least one thickening ingredient are first mixed together, then the mushrooms in the form of powder derived from said extract or of said extract in liquid form, are added to the mixture.

9. Process according to the preceding claim, **characterized in that** the extract is an extract of dried mushrooms.

10. Process according to claim 8 or 9, **characterized in that** at least one liquid ingredient is added to the fats-thickener mixture before adding other ingredients.

11. Process according to the preceding claim, **characterized in that** said at least one liquid ingredient is selected from: water, mushroom extract, concentrated mushroom extract.

12. Process according to claim 10 or 11 , **characterized in that** after mixing the at least one liquid ingredient, at least one powder ingredient is added.

13. Process according to claim 12, **characterized in that** the at least one powder ingredient is selected from: mushroom powder obtained from said extract, Glucose, Sodium Chloride, Glucone Delta Lactone, Potassium Chloride, starch.

14. Process according to the preceding claim, **characterized in that** in a first step the fats and the at least one thickener are mixed together, a predetermined amount of water is added to the mixture thus obtained and it is mixed again until obtaining a cream or frosting, then the following premixed powder ingredients are added: mushrooms, Glucose, Sodium Chloride, Glucone Delta Lactone, Potassium Chloride; the mushroom powder is a dry residue of said liquid extract, alternatively the mushrooms can be added directly in the form of said extract in liquid form, preferably concentrated.

15. Process according to any one of claims 8 to 14, **characterized in that** at least one mixing step occurs at a pressure lower than the atmospheric pressure.

## Patentansprüche

1. Verfahren zum Herstellen einer Lebensmittelzubereitung mit Pilzen, mit einer cremigen oder glasurartigen Beschaffenheit, welches ein Mehrphasensystem mit rheologischen Parametern ist, die bei einer Frequenz von 1 Hz bestimmt und durch eine Komplexviskosität (Pa*s) zwischen 5 und 120, einem Akkumulationsmodul G' (Pa) zwischen 30 und 900, einem dissipativen Modul G" (Pa) zwischen 10 und 300 definiert ist, wobei die Lebensmittelzubereitung einen auf das Gesamtgewicht bezogenen Gewichtsprozentsatz von 20 % bis 60 % essbare Fette, 5 % bis 40 % Pilztrockenrückstand, 20 % bis 60 % Wasser und wenigstens ein Verdickungsmittel aufweist, wobei der im Trockenrückstand berücksichtigte Pilzanteil aus der Verwendung eines flüssigen, vorzugsweise konzentrierten Pilzextrakts und/oder einem Trockenrückstand aus einem Pilzextrakt stammt, wobei, falls ein flüssiger Pilzextrakt in der Zubereitung verwendet wird, dessen Wasseranteil im Gesamtwassergehalt inbegriffen ist, wobei das Verfahren den Schritt des Erhaltens des verwendeten Pilzextrakts durch Einweichen einer vorgegebenen Menge von Pilzen in Wasser und anschließendes Filtern umfasst.

2. Verfahren nach Anspruch 1, **dadurch gekennzeichnet, dass** der flüssige Extrakt aus getrockneten Pilzen erhalten wird.

3. Verfahren nach dem vorstehenden Anspruch, **dadurch gekennzeichnet, dass** es einen auf das Gesamtgewicht bezogenen Gewichtsprozentsatz von 31 % bis 49 % essbare Fette, 5 % bis 35 % Pilze, berechnet im Trockenrückstand, und 25 % bis 49 % Wasser umfasst.

4. Verfahren nach einem der vorstehenden Ansprüche, **dadurch gekennzeichnet, dass** die Gesamtmenge an Verdickungsmittel oder Verdickungsmittelkombination, falls mehr als eines vorhanden ist, einen auf das Gesamtgewicht bezogenen Gewichtsprozentsatz von kleiner oder gleich 6 %, vorzugsweise kleiner oder gleich 2,5 % aufweist, wobei Xanthangummi, sofern vorhanden, vorzugsweise kleiner oder gleich 0,20 % ist.

5. Verfahren nach einem der vorstehenden Ansprüche, **dadurch gekennzeichnet, dass** es wenigstens zwei Zutaten umfasst, die in der Lage sind, die Wasseraktivität (a_{w}) herabzusetzen, ausgewählt aus NaCl, KCl, Glucose, Stärke.

6. Verfahren nach einem der vorstehenden Ansprüche, **dadurch gekennzeichnet, dass** es Glucono-delta-lacton umfasst.

7. Verfahren nach einem der vorstehenden Ansprüche, **dadurch gekennzeichnet, dass** es einen pH-Wert zwischen 3,5 und 3,9 aufweist.

8. Verfahren zum Herstellen einer Lebensmittelzubereitung mit Pilzen nach einem der vorstehenden Ansprüche, **dadurch gekennzeichnet, dass** die Zutaten entsprechend dem folgenden zeitlichen Ablauf kombiniert werden:
- zuerst werden Fette und wenigstens ein Verdickungsmittel vermischt, dann werden die Pilze in Form eines aus dem Extrakt gewonnenen Pulvers oder des Extrakts in flüssiger Form zu der Mischung hinzugegeben.

9. Verfahren nach dem vorstehenden Anspruch, **dadurch gekennzeichnet, dass** der Extrakt ein Extrakt aus getrockneten Pilzen ist.

10. Verfahren nach Anspruch 8 oder 9, **dadurch gekennzeichnet, dass** wenigstens eine flüssige Zutat zu der Mischung aus Fetten und Verdickungsmittel hinzugegeben wird, bevor andere Zutaten hinzugefügt werden.

11. Verfahren nach dem vorstehenden Anspruch, **dadurch gekennzeichnet, dass** wenigstens eine flüssige Zutat ausgewählt ist aus: Wasser, Pilzextrakt, konzentrierter Pilzextrakt.

12. Verfahren nach Anspruch 10 oder 11, **dadurch gekennzeichnet, dass** nach dem Mischen der wenigstens einen flüssigen Zutat wenigstens eine Pulverzutat hinzugegeben wird.

13. Verfahren nach Anspruch 12, **dadurch gekennzeichnet, dass** die wenigstens eine Pulverzutat ausgewählt ist aus: aus dem Extrakt gewonnenes Pilzpulver, Glucose, Natriumchlorid, Glucono-delta-lacton, Kaliumchlorid, Stärke.

14. Verfahren nach dem vorstehenden Anspruch, **dadurch gekennzeichnet, dass** in einem ersten Schritt die Fette und das wenigstens eine Verdickungsmittel vermischt werden, eine vorgegebene Menge Wasser zu der zuvor erhaltenen Mischung hinzugegeben wird, die wiederum gut vermischt wird, bis eine Creme oder Glasur erhalten wird, wobei anschließend die vorgemischten Pulverbestandteile hinzugegeben werden: Pilze, Glucose, Natriumchlorid, Glucono-delta-lacton, Kaliumchlorid; das Pilzpulver ist ein Trockenrückstand des flüssigen Extrakts, alternativ hierzu können die Pilze direkt in Form von flüssigem, vorzugsweise konzentriertem Extrakt hinzugegeben werden.

15. Verfahren nach einem der Ansprüche 8 bis 14, **dadurch gekennzeichnet, dass** der wenigstens eine Mischungsschritt bei einem Druck unterhalb des Atmosphärendrucks vorgenommen wird.

## Revendications

1. Procédé pour réaliser une préparation alimentaire avec des champignons, ayant une texture crémeuse ou glacée, qui est un système multi-phase avec des paramètres rhéologiques déterminés à une fréquence de 1 Hz, définis par une viscosité complexe (Pa*s) entre 5 et 120, un module d'accumulation G' (Pa) entre 30 et 900, un module de dissipation G" (Pa) entre 10 et 300, dans lequel la préparation alimentaire a, en pourcentage de poids sur le poids total, 20% à 60% de matières grasses comestibles, 5% à 40% de résidu sec de champignons, 20% à 60% d'eau, et au moins un ingrédient épaississant, le pourcentage de champignons considéré dans la condition de résidu sec dérive de l'utilisation d'un extrait liquide de champignons, de préférence concentré et/ou d'un résidu sec résultant d'un extrait de champignons, où, dans le cas où un extrait liquide de champignons est utilisé dans la formulation, son pourcentage en eau est ici considéré comme inclus dans le pourcentage total d'eau, le procédé comprenant l'étape d'obtention de l'extrait de champignons utilisé par trempage d'une quantité prédéterminée de champignons dans l'eau et par filtration successive.

2. Procédé selon la revendication 1, **caractérisé en ce que** l'extrait liquide est obtenu à partir de champignons séchés.

3. Procédé selon la revendication précédente, **caractérisé en ce qu'**il comprend, en pourcentage de poids sur le poids total, 31% à 49% de matières grasses comestibles, 5% à 35% de champignons calculés à l'état de résidu sec, 25% à 49% d'eau.

4. Procédé selon l'une quelconque des revendications précédentes, **caractérisé en ce que** la quantité totale d'ingrédient épaississant, ou d'une combinaison d'ingrédients épaississants, si plusieurs sont présents, en pourcentage de poids sur le poids total, est inférieure ou égale à 6%, plus préférentiellement inférieure ou égale à 2,5%, où la gomme de xanthane, si elle est présente, est de préférence inférieure ou égale à 0,20%.

5. Procédé selon l'une quelconque des revendications précédentes, **caractérisé en ce qu'**il comprend au moins deux ingrédients capables de diminuer l'activité d'eau (a_{w}) sélectionnés parmi NaCl, KC1, glucose, amidon.

6. Procédé selon l'une quelconque des revendications précédentes, **caractérisé en ce qu'**il comprend du glucono-delta-lactone.

7. Procédé selon l'une quelconque des revendications précédentes, **caractérisé en ce qu'**il a un pH compris entre 3,5 et 3,9.

8. Procédé pour réaliser une préparation alimentaire avec des champignons selon l'une quelconque des revendications précédentes, **caractérisé en ce que** les ingrédients sont combinés selon la séquence temporelle suivante :
- des matières grasses et au moins un ingrédient épaississant sont d'abord mélangés ensemble, puis les champignons sous la forme de poudre obtenue à partir dudit extrait ou dudit extrait sous forme liquide sont ajoutés au mélange.

9. Procédé selon la revendication précédente, **caractérisé en ce que** l'extrait est un extrait de champignons séchés.

10. Procédé selon la revendication 8 ou 9, **caractérisé en ce que** au moins un ingrédient liquide est ajouté au mélange matières grasses-épaississant avant d'ajouter d'autres ingrédients.

11. Procédé selon la revendication précédente, **caractérisé en ce que** ledit au moins un ingrédient liquide est sélectionné parmi : eau, extrait de champignons, extrait de champignons concentré.

12. Procédé selon la revendication 10 ou 11, **caractérisé en ce que**, après le mélange de l'au moins un ingrédient liquide, au moins un ingrédient en poudre est ajouté.

13. Procédé selon la revendication 12, **caractérisé en ce que** l'au moins un ingrédient en poudre est sélectionné parmi : poudre de champignons obtenue à partir dudit extrait, glucose, chlorure de sodium, glucono-delta-lactone, chlorure de potassium, amidon.

14. Procédé selon la revendication précédente, **caractérisé en ce que**, dans une première étape, les matières grasses et l'au moins un épaississant sont mélangés ensemble, une quantité d'eau prédéterminée est ajoutée au mélange ainsi obtenu et il est mélangé à nouveau jusqu'à obtenir une crème ou glaçage, puis les ingrédients en poudre pré-mélangés suivants sont ajoutés : champignons, glucose, chlorure de sodium, glucono-delta-lactone, chlorure de potassium ; la poudre de champignons est un résidu sec dudit extrait liquide, en variante les champignons peuvent être ajoutés directement sous la forme dudit extrait sous forme liquide, de préférence concentrée.

15. Procédé selon l'une quelconque des revendications 8 à 14, **caractérisé en ce qu'**au moins une étape de mélange se produit à une pression inférieure à la pression atmosphérique.
